# EUROPEAN PATENT APPLICATION

(11) **EP 3 524 849 A2**
(43) Date of publication of application: **14.08.2019**
(21) Application number: 17859842.1
(22) Date of filing: 04.10.2017
(51) Int. Cl.: F16H 1/32

(54) **TRANSMISSION OF A RECTILINEAR OR ROTARY MOVEMENT ON A SINGLE END AND IN A SINGLE DIRECTION**

(30) Priority: 10.10.2016 EG 2016101663
(71) Applicant: Elgamil, Mohamed Ahmed, Giza (EG)
(72) Inventor: Elgamil, Mohamed Ahmed, Giza (EG)
(74) Representative: Sach, Greg Robert
(86) International application number: PCT/EG2017/000027
(87) International publication number: WO 2018/068804

(57) **Abstract**

In this mechanism, the linear or rotational motion is transmitted from one side to the other in only one direction, while its reverse motion and both other side motion directions can run freely without transmission. To obtain this function of transmitting the motion between both sides in different natures, the link that transmits the motion should be linked with a body which is not controlled by the in-between relative motion. The driving side can oscillate in short strokes or move with unlimited motion, both motion natures can have its own transmission mechanism design. Links could be used in pairs for force balance. One of the ways to transmit the motion from the driving side to the links is by using a waving surface to push and release the link. These waves can be formed in number which is different from the number of link pairs in order to ensure different phases and hence insure contacts of some of them for high and stable transmitted forces and torques. The motion transmission from the link and the motion output body could be through biting, friction or positive engagement in teethed surfaces.

## Description

### Technical Field

### Controlling motion transmission between two bodies

### Background Art

Rotary and linear motions are transmitted in one of their two directions between two bodies through several mechanisms specially designed for that purpose, these components are called "one way clutch". These components transmit the motion from a driving body to drive another body in its same direction (couple the two motions), and when the driver reverses its direction of motion, it moves freely without transmitting its motion to the other body (decouple the two motions). The motion of a body looks opposite in direction if observed from another body due to their relative motion, therefore, the driven body in the previous case transmits its motion to the other body only if it moves in opposite direction to the motion transmitted in that case, and moves freely if it reverses its direction.

Many mechanisms are used for that purpose, ratchet mechanisms are the most common of them where they are used heavily in bicycles. Another mechanism consists of rollers backed with springs, these rollers moves to a wide space if the motion is in its free direction, and ceased between the two bodies to let them move together if the motion is in the driving direction. Other mechanism uses sprags or cams instead of the rollers.

All these mechanisms transmit the motion in only one direction from both bodies, but transmitting the motion from only one body in only one direction to the other body, while the driving body can move in the other direction freely without driving the driven body, and the driven body can move in both directions without affecting the driving body, this clutch does not exist.

### Disclosure of Invention

### - Technical Problem

Transmitting the motion in the manner described in the background art does not help many applications. For example, to utilize the torque motors described in "PCT/EG2016/000011" and its related patent applications, which has high torque but limited angular stroke, in building actuators and motors of continuous stepped motion, a one way clutch should be used to utilize this indexing motion.

Prevailing one way clutch can be used only if the generated continuous stepped motor is in one direction only. If it is required to generate continuous stepped motion in both directions, a reversing gearbox should be used. The reason for that can be understood if we consider using two prevailing clutches, each of them is responsible for transmitting the motion in one direction. The one way clutch has an outer race and inner race, suppose the outer race transmits the clockwise (CW) rotation to the inner race, then the inner race will transmit the counterclockwise (CCW) rotation to the outer one. Assume connecting the indexing motion generator to two inner races of two one way clutches, one of them (clutch 1) to transmit the CW rotation and the other (clutch 2) to transmit the CCW rotation to the output shaft which is connected to their two outer races. Because of the outer race drives the inner race in its opposite driving direction, if clutch 1 drives the output shaft in CW direction, clutch 2 outer race will transmit this motion to its inner race and then the motion will be blocked. In other words, the two opposite clutches will not allow any free movement.

### - Solution to Problem

To transmit the motion from one driving body to another driven body in only one direction, while the driving body reverse motion and the driven body motion in both directions run free without transmission, the relative motion between the two bodies should be considered. The motion of anybody with respect to another body is opposite to its own motion as explained before when discussing the possibility of using two prevailing one way clutches to generate continues motion in both direction from indexing motion. To generate continues motion in both direction from indexing motion without blockage, all movements should be referred to an absolute body not to relative motions. The most suitable body for this purpose is a frame which will be fixed to the machine in which this clutch is installed. This fixed frame will be neutral and absolute for all motions.

Drawing (1) shows a mechanism to transmit a linear reciprocating motion of limited stroke (the limited stroke 17) in only one direction and from only one body. The mechanism consists of the housing 1 in which all parts are installed, this part is the fixed part and all movements are referred to it. Body 2 moves linearly in the guide 3 which is a groove in body 1, and similarly, body 2 moves linearly in the guide 5. Link 6 can rotate within the guide 7 which is inclined and formed inside fixed body 1, and contacts body 10 at point 9. If body 4 moves to direction 13, then link 6 will be pushed by pin 8 which is a part of body 4 and moves to bite body 10 at contact point 9 and pushes it. Consequently, body 10 pushes body 2 to move in the same direction 14 through teeth 11. Springs 12 are not necessarily separate springs, they just indicate the elastic deflection of body 10 under the biting of link 6.

Reciprocating stroke length should not be long enough till link 6 should remain inclined in the same direction and never comes to be perpendicular to body 10. If body 4 moves to the direction 15, the springs will push link 6 away from body 10, in this way body 4 will move alone without affecting body 2.

If body 2 of unlimited stroke moves to any of its both directions, it will move freely without affecting body 4 because it cannot cause the biting which couple the motion. Dashed lines indicate bodies hidden behind the appearing ones.

Drawing (2) shows body 4 linear motion with long strokes 17. If body 4 moves to direction 13, then link 6 will be pushed by part 8 of wave shape (which is fixed to body 4) through its extension 6-1, this movement pushes body 2 in the same direction 14. When point of contact reaches the top of the wave (line 19), link 6 will be released to its home position by the action of the springs in preparation to meet the next wave. All other movements are free as described before.

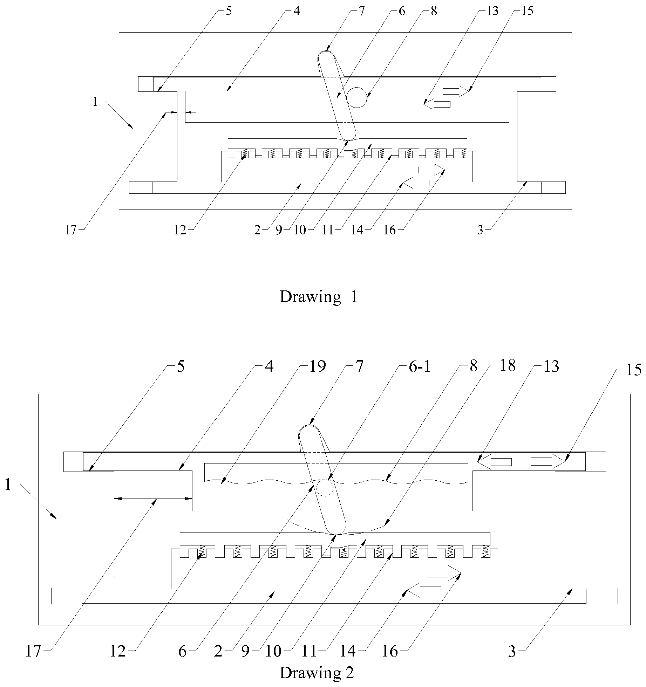

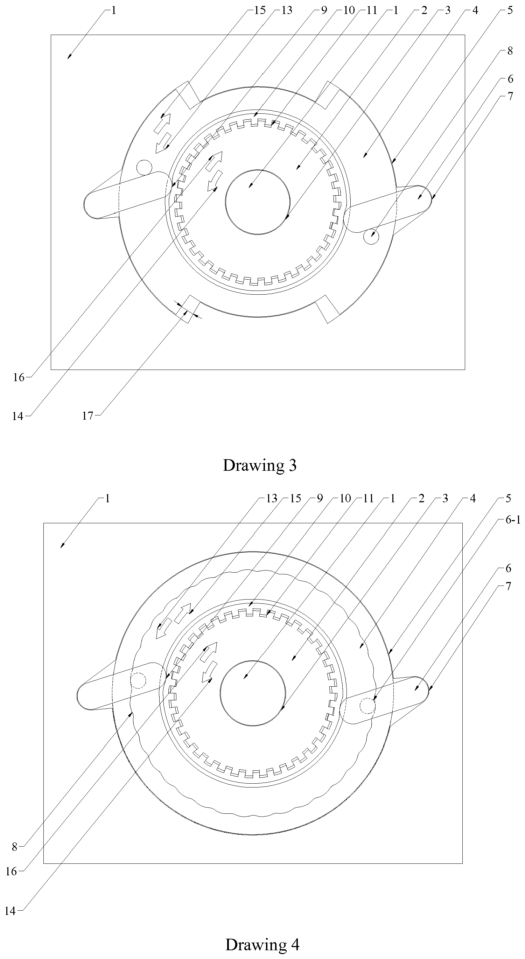

The linear reciprocation motion in Drawing (1) is replaced with oscillating rotary motion in Drawing 3, and thus body 10 becomes a complete ring to generate the spring action by itself. Link 6 is preferable to be in pairs to balance biting forces.

Drawing (4) shows how to apply to continuous motion, it is to be noted that links and waves are preferable to be in pairs, but with different numbers to insure different phase so that some of the pairs are in biting when others are not.

In drawing (5), the motion coupling between link 6 and output shaft (body 2) is carried out by friction, body 10 no more exists. To achieve that without slippage, the tangential force components 21 of the contact force 20 should be less than the normal force component 22 multiplied be the coefficient of friction. Link 6 becomes floating, and its relationship with the frame 1 is by the spring 23. Two groups of links 6 are used, group 6-a which is used when rotating in the CW direction as shown in the drawing, and group 6-b are used when rotating in the CCW direction. Both groups are in the same plane. Each group consists of four links, and thus body 4 pushes them by four plungers. The spring has axial and lateral deflections when displaces as shown, therefore it will push link 6 away from body 2 when rebounding after the plunger of body 4 returns to its home position. This design can be used to transform the indexing motion of a motor that generate rotary motion in both directions to continuous stepped motion in both directions.

Drawing 6 shows the case when the engagement between body 2 and link 6 is positive by using teethed surfaces. This design is suitable for building stepper motors of a specific step angle. The lateral force of spring 23 will assist freeing link 6 from body 2 teeth during resetting motion.

### Brief Description of Drawings

Drawing (1) is an example of transmitting the linear reciprocating motion from only one body and in only one direction.
Drawing (2) is an example of transmitting the long linear motion from only one body and in only one direction.
Drawing (3) is an example of transmitting the rotary oscillating motion from only one body and in only one direction.
Drawing (4) is an example of transmitting the unlimited rotary motion from only one body and in only one direction.
Drawing (5) is an example of using two groups in transmitting the rotary oscillating motion to the output shaft in both directions, where friction transmits the motion to the output shaft.
Drawing (6) is an example of using two groups in transmitting the rotary oscillating motion to the output shaft in both directions, where positive engagement transmits the motion to the output shaft

### Industrial Applicability

The enclosed invention provides a simple mechanism to transform the indexing motion to a continuous stepped motion in both directions without blocking each other. This is necessary to utilize actuators and motors of high torque and limited stroke in building motors that can rotate in both directions, if this is done by reversing gearbox for example, it will be complicated and expensive. Similarly, it can replace the prevailing one-way clutches when the movement of one of the two involved bodies required not to affect the movement of the other body.

## Claims

1. A mechanism to transmit the linear or rotary motion from a driving body to a driven body in only one direction while the driving body reverses its direction freely without affecting the driven body and the driven body can move in both directions without affecting the driving body, wherein the transmission is carried out through a link which refers its motion to a third body, wherein the third body is a frame that carries all the other components

2. A mechanism to transmit the linear or rotary motion from a driving body to a driven body in only one direction as in claim 1, wherein the third body is relative fixed with respect to the driving body and the driven body.

3. A mechanism to transmit the linear or rotary motion from a driving body to a driven body in only one direction as in item 1, where the driving body can move in a limited stroke, of moves continuously with unlimited stroke.

4. A mechanism to transmit the linear or rotary motion from a driving body to a driven body in only one direction as in claim 1, wherein the driving body transmits its motion to the link and the same link transmits the motion directly to the driven body.

5. A mechanism to transmit the linear or rotary motion from a driving body to a driven body in only one direction as claimed in claim 1, where the driving body transmits its motion to the link of motion referred to the fixed frame and the same link transmits the motion to the driven body through an intermediate body.

6. A mechanism to transmit the linear or rotary motion from a driving body to a driven body in only one direction as in claim 1, where the driving body is always in contact with the link during the driving motion

7. A mechanism to transmit the linear or rotary motion from a driving body to a driven body in only one direction as in claim 1, where the driving body contacts and releases the link during the driving motion through a surface formed as waves or any shape.

8. A mechanism to transmit the linear or rotary motion from a driving body to a driven body in only one direction as in claim 1, where the link is a plurality of links.

9. A mechanism to transmit the linear or rotary motion from a driving body to a driven body in only one direction as in claim 7, where the number waves insures engagement with the link in different phases.

10. A mechanism to transmit the linear or rotary motion from a driving body to a driven body in only one direction as in claim 1, where the contact between the link and the motion output body to couple the motion could be by friction, biting or teethed positive engagement.
